# EUROPÄISCHE PATENTSCHRIFT

(11) **EP 1 794 451 B1**
(45) Veröffentlichungstag und Bekanntmachung des Hinweises auf die Patenterteilung: **06.04.2011**
(21) Anmeldenummer: 05779172.5
(22) Anmeldetag: 25.08.2005
(51) Int. Cl.: F03D 11/00, F03D 1/06

(54) **VORRICHTUNG ZUR KENNZEICHNUNG EINER WINDENERGIEANLAGE**
DEVICE FOR MARKING A WIND POWER PLANT
DISPOSITIF DE MARQUAGE D'UNE EOLIENNE

(30) Priorität: 18.09.2004 DE 102004045415
(43) Veröffentlichungstag der Anmeldung: 13.06.2007
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2005/054177
(87) Internationale Veröffentlichungsnummer: WO 2006/029955

(56) Entgegenhaltungen:
- WO-A-03/104648
- DE-C1- 19 950 620
- DE-U1- 20 212 352
- DE-U1-202004 016 460
- US-A- 4 285 431
- BUNDESMINISTERIUM FÜR VERKEHR,BAU-UND WOHNUNGSWESEN: NACHRICHTEN FÜR LUFTFAHRER, Bd. 1, Nr. 48, 23. Dezember 1999 (1999-12-23), XP002354626 Braunschweig, DE

## Beschreibung

Die vorliegende Erfindung betrifft eine Windenergieanlage und insbesondere die Kennzeichnung einer Windenergieanlage als Luftfahrthindernis.

Eine solche Kennzeichnung ist vorgeschrieben und wird grundsätzlich nach Tageskennzeichnung und Nachtkennzeichnung unterschieden. Während die Nachtkennzeichnung stets eine Befeuerung mit rotem Licht ist, kann die Tageskennzeichnung wahlweise mit weißem Licht oder alternativ mit farbigen (rot/weißen) Markierungen am Rotorblatt erfolgen. Diese Farbmarkierungen (Signalmarkierungen) sind von der Rotorblattspitze ausgehend regelmäßig rot-weiß-rot und jeder dieser Abschnitte muss gemäß der geläufigen Bauvorschriften eine Länge von etwa 6 Metern oder mehr aufweisen.

Während die Nachtkennzeichnung auch während der Bauphase, wenn die Anlage noch nicht mit Strom aus dem Netz versorgt werden kann, mit Energiespeichern sichergestellt werden kann, die während des Tages aufgeladen werden, ist dies für eine Tageskennzeichnung mit weißem Licht nur unter unverhältnismäßig hohem Aufwand möglich. Andererseits würde aber die Anbringung rot-weiß-rot gekennzeichneter Blätter zwar eine Tageskennzeichnung mit weißem Licht obsolet machen, dies bedeutet aber einen beträchtlichen Mehraufwand bei der Herstellung der Rotorblätter.

Als allgemeiner Stand der Technik sei auf die Dokumente DE 20 2004 006 595 U1, DE 101 60 360 B4 und WO 03104648 werwiesen.

Aufgabe der vorliegenden Erfindung ist es, eine einfache Tageskennzeichnung zu schaffen, welche leicht abänderbar ist und die Nachteile der in Farbmarkierung gekennzeichneten Blätter vermeidet.

Diese Aufgabe wird erfindungsgemäß mit einer Vorrichtung mit den Merkmalen nach Anspruch 1 gelöst. Vorteilhafte Weiterbildungen sind in den Unteransprüchen beschrieben.

Die Erfindung schlägt eine vorübergehende Farbmarkierungskennzeichnung der Rotorblätter einer Windenergieanlage vor.

Dabei liegt der Erfindung die Erkenntnis zu Grunde, dass die Tageskennzeichnung durch farbige Markierung der Rotorblätter zwar ohne elektrische Energie auskommt, aber nur vorübergehend benötigt wird. Daher genügt es, den Rotorblättern farbig geeignet gestaltete Hüllen überzuziehen und diese Hüllen bei der Inbetriebnahme bzw. nach dem Herstellen der Stromversorgung für die Windenergieanlage wieder zu entfernen.

Die Hülle ist bevorzugt so ausgebildet, dass die farbliche Gestaltung der Hülle bereits dem Kennzeichnungsvorschriften für Luftfahrthindernisse entspricht.

In einer bevorzugten Ausführungsform der Erfindung werden Seile als Befestigungsmittel verwendet, mit denen der Abstand von der Öffnung der Hülle bis zur Rotorblattwurzel überbrückt werden kann und die eine ausreichende Länge aufweisen, um eine sichere Befestigung im Bereich der Rotorblattwurzel oder z. B. an der Nabenverkleidung zu ermöglichen.

Durch einen besonders reißfest ausgebildeten Rand der Öffnung der Hülle und wenigstens ein daran angebrachtes, besonders reißfestes Befestigungsmittel kann selbst bei Versagen von anderen Befestigungsmitteln ein ungewolltes Lösen der Hülle und damit ein unkontrolliertes Herabfallen oder Fortwehen derselben, und der damit fast zwangsläufig einhergehende Verlust der Hülle verhindert werden.

In einer besonders bevorzugten Weiterbildung der Erfindung ist die Innenseite der Hülle mit einem Material gepolstert, das weicher ist, als die Rotorblattoberfläche. Dadurch kann eine Beschädigung der Rotorblattoberfläche durch die Hülle zuverlässig vermieden werden. Weiterhin kann die Hülle dann bereits am Boden auf das Rotorblatt aufgezogen werden und bereits als Schutzhülle beim Handhaben des Rotorblattes dienen. Dabei kann die Hülle insbesondere an den Stellen, an denen das Rotorblatt z. B. von einem Kran getragen wird, besonders verstärkt gepolstert sein.

Dazu kann sich die Hülle besonders bevorzugt im Wesentlichen über die gesamte Rotorblattlänge erstrecken. Dadurch kann das Anbringen bzw. Entfernen zusätzlicher Polster vor bzw. nach dem Handhaben der Rotorblattes vermieden und damit der Ablauf vereinfacht werden. Somit ist eine ausreichende Polsterung zum Schutz des Rotorblattes vor Beschädigungen, z. B. durch ein Krangeschirr, verwirklicht.

Da das äußere Ende der Hülle, also derjenige Teil, der sich an der Rotorblattspitze befindet, in roter Farbe gehalten ist, kann die Hülle bereits vor dem Straßentransport auf das Rotorblatt aufgezogen werden und damit als zusätzliche oder auch erforderliche Sicherung während des Transportes dienen. Dabei kann die Hülle an ihrem geschlossenen Ende natürlich auch eine oder mehrere Schlaufen oder andere, geeignete Halterungen zur Aufnahme von Reflektoren und/oder Leuchten aufweisen, mit denen ein überstehendes Rotorblattende während des Transports kenntlich gemacht werden kann.

Vorteilhafte Weiterbildungen der Erfindung sind in den Unteransprüchen angegeben.

Nachfolgend wird die Erfindung anhand der Figuren näher erläutert. Dabei zeigen:
- Figur 1: eine vereinfachte Darstellung eines Rotorblattes;
- Figur 2: eine vereinfachte Darstellung einer ersten Ausführungsform einer erfindungsgemäßen Hülle; und
- Figur 3: eine zweite Ausführungsform einer erfindungsgemäßen Hülle.

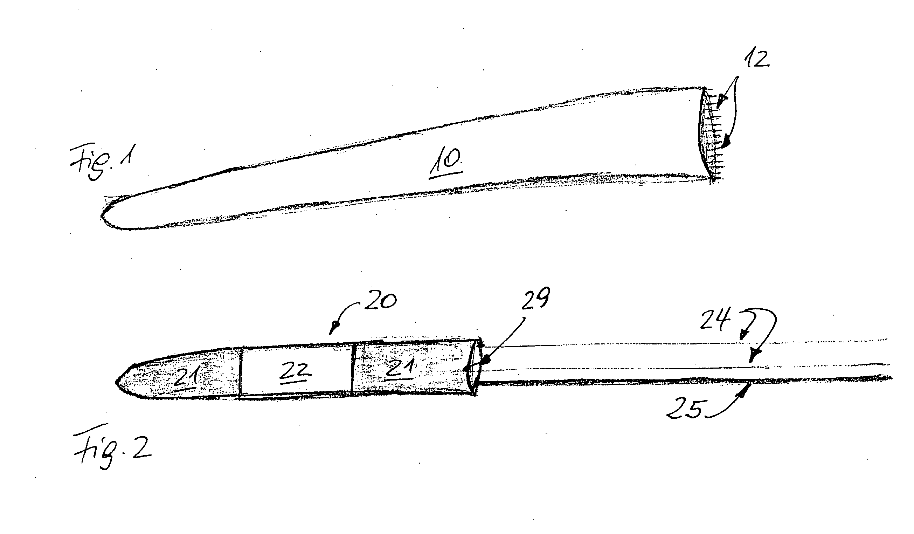

Das in Figur 1 dargestellte Rotorblatt 10 weist in dieser Figur links eine Rotorblattspitze und am gegenüberliegenden Ende Befestigungsbolzen 12 auf. Mit diesen Befestigungsbolzen 12 wird das Rotorblatt an der Nabe der Windenergieanlage befestigt.

Figur 2 zeigt eine erfindungsgemäße Hülle 20. Diese Hülle 20 weist an der Rotorblattspitze beginnend einen roten Abschnitt 21, einen weißen Abschnitt 22 und wiederum einen roten Abschnitt 21 auf. An dem letztgenannten roten Abschnitt 21 ist die Hülle offen und an dem die Öffnung umschließenden Rand 29 sind Befestigungsmittel in Form von Seilen 24, 25 angebracht.

Um die Hülle 20 zuverlässig befestigen zu können, sind die Seile 24, 25 in ihrer Länge so bemessen, dass sie die Distanz zwischen dem Rand 29 der Hülle 20 und der Rotorblattwurzel überbrücken können und eine sichere Befestigung erlauben. Dabei kann eines der Seile 25 verstärkt sein und auch der Rand 29 der Öffnung der Hülle kann so verstärkt ausgeführt sein, dass selbst bei dem Versagen der übrigen Seile 24 die Hülle immer noch am Rotorblatt festgehalten wird und damit ein unkontrolliertes Fortwehen und eine mögliche Gefährdung der Umgebung zuverlässig verhindert wird.

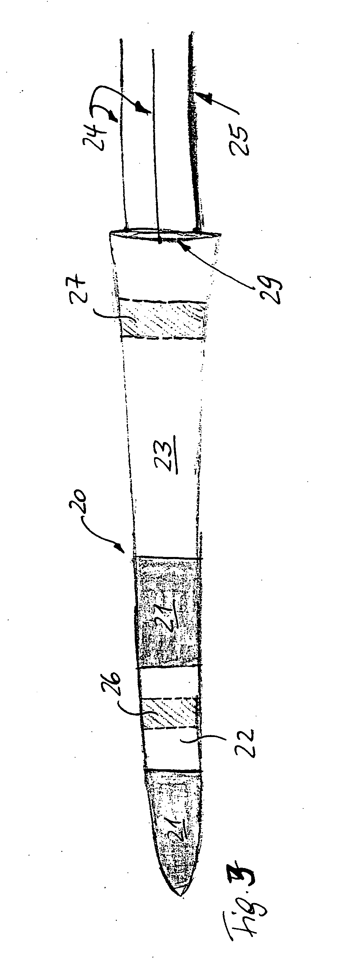

Figur 3 zeigt eine alternative Ausführungsform der erfindungsgemäßen Hülle 20. Bei dieser alternativen Ausführungsform sind wiederum an der Rotorblattspitze beginnend ein roter Abschnitt 21, ein weißer Abschnitt 22 und wiederum ein roter Abschnitt 21 angebracht, die den Vorschriften für eine Tageskennzeichnung ebenso entsprechen, wie dies bei der in Figur 2 gezeigten, ersten Ausführungsform der Hülle 20 der Fall ist.

Bei dieser zweiten Ausführungsform schließt sich aber ein weiterer Bereich 23 an, dessen Farbgebung allerdings nicht zwingend vorgeschrieben ist. Dieser Bereich 23 kann z. B. weiß ausgeführt sein, er kann aber auch transparent sein. Er kann sogar z. B. mit einem Logo oder einem anderen Hinweis auf den Hersteller der Windenergieanlage und/oder des Rotorblattes versehen sein.

Auch die zweite Ausführungsform der Hülle 20 ist natürlich an einer Seite offen und an dem Rand 29 dieser offenen Seite sind wiederum Seile 24, 25 als Befestigungsmittel angebracht, die eine Befestigung der Hülle 20 z. B. im Bereich der Rotorblattwurzel an der Nabe oder an der Nabenverkleidung ermöglichen.

Ebenso kann natürlich der Rand 29 wiederum besonders verstärkt sein und ein besonders starkes Seil 25 vorgesehen sein, um auch bei Versagen der übrigen Seile 24 ein Lösen der Hülle 20 von dem Rotorblatt sicher zu verhindern.

In dieser Figur ist in dem weißen Bereich 22 eine Polsterung 26 dargestellt und in dem Bereich 23 der Hülle 20 ist eine weitere Polsterung 27 dargestellt. Diese Bereiche 26, 27 kennzeichnen beispielhaft die besonders verstärkte Polsterung der Rotorblatthülle 20, die stärker ist als die (nicht dargestellte) vollständige Innenpolsterung dieser Hülle 20. Dabei sind diese verstärkten Bereiche 26, 27 so angeordnet, dass sie bei der auf das Rotorblatt aufgezogenen Hülle 20 genau an den Stellen positioniert sind, an denen das Rotorblatt mit einem Kran angehoben wird, bzw. an denen das Krangeschirr zum Handhaben des Rotorblattes um dieses Blatt herum gelegt wird.

Damit können die zum Schutz des Blattes beim Handhaben zwingend erforderlichen Arbeitsgänge des Anbringens des Entfernens von Polstern an dem bzw. von dem Rotorblatt entfallen und der Arbeitsablauf wird weiter rationalisiert.

## Patentansprüche

1. Vorrichtung zur vorübergehenden Signal kennzeichnung einer Windenergieanlage als Luftfahrthindernis,
**dadurch gekennzeichnet, dass** die Vorrichtung aus einer Hülle (20) besteht, die eine vorgegebene farbliche Gestaltung (21, 22) aufweist und ferner lösbare Befestigungsmittel (24, 25) zur lösbaren Befestigung der Hülle an einem Rotorblatt der Windenergieanlage aufweist, wobei während der Befestigung die Hülle das Rotorblatt wenigstens teilweise umschließt.

2. Vorrichtung nach Anspruch 1,
**gekennzeichnet durch** abwechselnd rote (21) und weiße (22) Abschnitte der Hülle (20), wobei jeder Abschnitt (21, 22) eine vorgegebene Länge aufweist.

3. Vorrichtung nach einem der vorstehenden Ansprüche,
**dadurch gekennzeichnet, dass** die Befestigungsmittel (24, 25) als Seile ausgebildet sind, deren Länge derart bemessen ist, dass die Seile die Distanz von einer offenen Seite der Hülle bis zur Rotorblattwurzel überbrücken und weiterhin eine Befestigung im Bereich der Rotorblattwurzel zulassen.

4. Vorrichtung nach Anspruch 3,
**gekennzeichnet durch** einen besonders reißfest ausgebildeten Rand (29) an der offenen Seite der Hülle (20) und wenigstens ein an den Rand (29) angebrachtes, besonders reißfestes Befestigungsmittel (25).

5. Vorrichtung nach einem der vorstehenden Ansprüche,
**gekennzeichnet durch** eine Polsterung an der Innenseite der Hülle mit einem Material, das weicher ist als die Oberfläche des Rotorblattes(10).

6. Vorrichtung nach Anspruch 4,
**gekennzeichnet durch** eine besonders verstärkte Polsterung (26, 27) an den Stellen der Hülle, an denen Handhabungsmittel an dem Rotorblatt (10) zu Transportzwecken angebracht werden.

7. Vorrichtung nach einem der vorstehenden Ansprüche,
**gekennzeichnet durch** eine Länge der Hülle, welche der Länge des Rotorblattes (10) im Wesentlichen entspricht.

8. Windenergieanlage mit einer Vorrichtung nach einem der vorstehenden Ansprüche.

## Claims

1. Apparatus for temporary signal identification of a wind power installation as an aviation obstruction
**characterised in that** the apparatus comprises a sheath (20) which is of a predetermined coloured configuration (21, 22) and also has releasable fixing means (24, 25) for releasably fixing the sheath to a rotor blade of the wind power installation, wherein during fixing the sheath at least partially encloses the rotor blade.

2. Apparatus according to claim 1 **characterised by** alternately red (21) and white (22) portions of the sheath (20), each portion (21, 22) being of a predetermined length.

3. Apparatus according to one of the preceding claims **characterised in that** the fixing means (24, 25) are in the form of cables whose length is such that the cables bridge over the distance from an open end of the sheath to the rotor blade root and further permit fixing in the region of the rotor blade root.

4. Apparatus according to claim 3 **characterised by** an edge (29) at the
open end of the sheath (20), which edge is of a particularly tear-resistant nature, and at least one particularly tear-resistant fixing means (25) fitted to the edge (29).

5. Apparatus according to one of the preceding claims **characterised by** a cushioning at the inside of the sheath with a material which is softer than the surface of the rotor blade (10).

6. Apparatus according to claim 4 **characterised by** a particularly strengthened cushioning (26, 27) at the locations of the sheath at which handling means are fitted to the rotor blade (10) for transport purposes.

7. Apparatus according to one of the preceding claims **characterised by** a length of the sheath, which substantially corresponds to the length of the rotor blade (10).

8. A wind power installation having an apparatus according to the one of the preceding claims.

## Revendications

1. Dispositif de signalisation temporaire d'une éolienne comme obstacle à la navigation aérienne,
**caractérisé en ce que** le dispositif se compose d'une enveloppe (20) qui présente une structure en couleur prédéterminée (21, 22) ainsi que des moyens de fixation amovibles (24, 25), permettant de fixer l'enveloppe de manière amovible à une pale de rotor de l'éolienne, dans lequel l'enveloppe entoure au moins partiellement la pale de rotor lors de la fixation.

2. Dispositif selon la revendication 1,
**caractérisé par** des parties alternantes rouges (21) et blanches (22) de l'enveloppe (20), dans lequel chaque partie (21, 22) présente une longueur prédéterminée.

3. Dispositif selon l'une des revendications précédentes,
**caractérisé en ce que** les moyens de fixation (24, 25) sont configurés en tant que câbles dont la longueur est calculée de telle sorte que les câbles couvrent la distance depuis un côté ouvert de l'enveloppe jusqu'à la base de la pale de rotor et en outre permettent une fixation dans la zone de la base de la pale de rotor.

4. Dispositif selon la revendication 3,
**caractérisé par** un bord (29) configuré de manière à être particulièrement résistant à la déchirure sur le côté ouvert de l'enveloppe (20) et au moins un moyen de fixation particulièrement résistant à la déchirure (25) aménagé sur le bord (29).

5. Dispositif selon l'une des revendications précédentes,
**caractérisé par** un rembourrage sur le côté intérieur de l'enveloppe avec un matériau qui est plus mou que la surface de la pale de rotor (10).

6. Dispositif selon la revendication 4,
**caractérisé par** un rembourrage particulièrement renforcé (26, 27) sur les endroits de l'enveloppe où des moyens d'actionnement sont ménagés sur l'enveloppe (10) à des fins de transport.

7. Dispositif selon l'une des revendications précédentes,
**caractérisé par** une longueur de l'enveloppe qui correspond pour l'essentiel à la longueur de la pale de rotor (10).

8. Eolienne comprenant un dispositif selon l'une des revendications précédentes.
